# EUROPEAN PATENT SPECIFICATION

(11) **EP 1 790 892 B1**
(45) Date of publication and mention of the grant of the patent: **09.07.2008**
(21) Application number: 06121300.5
(22) Date of filing: 26.09.2006
(51) Int. Cl.: F16K 35/04

(54) **A fluid intercepting device**
Schliessvorrichtung für Flüssigkeiten
Dispositif d'interception de fluides

(30) Priority: 25.11.2005 IT BS20050148
(43) Date of publication of application: 30.05.2007
(73) Proprietor: Idraulica Montini di Montini Ettore e C. S.n.c., 25060 Brione ( Brescia) (IT)
(72) Inventor: Labemano, Edoardo, 25060, Polaveno (Brescia) (IT); Montini, Ettore, 25060, Brione (Brescia) (IT); Montini, Fulvio, 25065, Lumezzane S.A. (Brescia) (IT)
(74) Representative: Crippa, Paolo Ernesto

(56) References cited:
- DE-A1- 1 903 679
- FR-A1- 2 251 766
- US-A1- 1 652 142
- US-A1- 5 004 014

## Description

The object of the present invention is a fluid intercepting device.

In particular, the object of the present invention is a fluid intercepting device suitable for being associated to a fluid dispensing system, for example upstream thereof, for blocking the fluid dispensing to the distribution system in the event of system leaks. The intercepting device according to the present invention is especially useful also in the case the fluid dispensing to the system must be stopped after dispensing a predetermined amount of fluid or after a predetermined interval of time.

In the field of fluid distribution systems, especially for household purpose and intended for water distribution, the consequences of a system leak often lead to serious consequences: floods, water penetration to the lower floors of a block of flats, danger of electrical leaks due to the contact between the water and the electrical parts of household appliances, and more.

Besides the danger these events imply, such as the possibility of slipping on the floors or of getting an electrical shock, the resulting damages can only be repaired with considerable expenses.

It is noted that these leaks cause serious damages especially when a house is unattended, for example during long holiday periods or at night.

Some intercepting devices are known in the field for obviating such disadvantages which, detecting the water leak from the system, block the water dispensing to the system itself.

Some intercepting devices are known from documents US 5004014, US 5038820, GB 2310068, US 5771920, US 6164319, US 7216727 and GB 2411244.

However, such devices exhibit a very complex and expensive structure.

Moreover, the devices currently known exhibit continuous malfunctions, most of the times due to the interference between the moving parts present therein and grains of sand, scale and other residues carried by the water.

The object of the present invention is to obtain a fluid intercepting device which should overcome the disadvantages mentioned with reference to the prior art while meeting the above requirements.

Such object is achieved by an intercepting device obtained according to claim 1. The dependent claims describe embodiment variations.

The features and advantages of the intercepting device according to the present invention will appear more clearly from the following description, made by way of an indicative and non-limiting example with reference to the annexed figures, wherein:

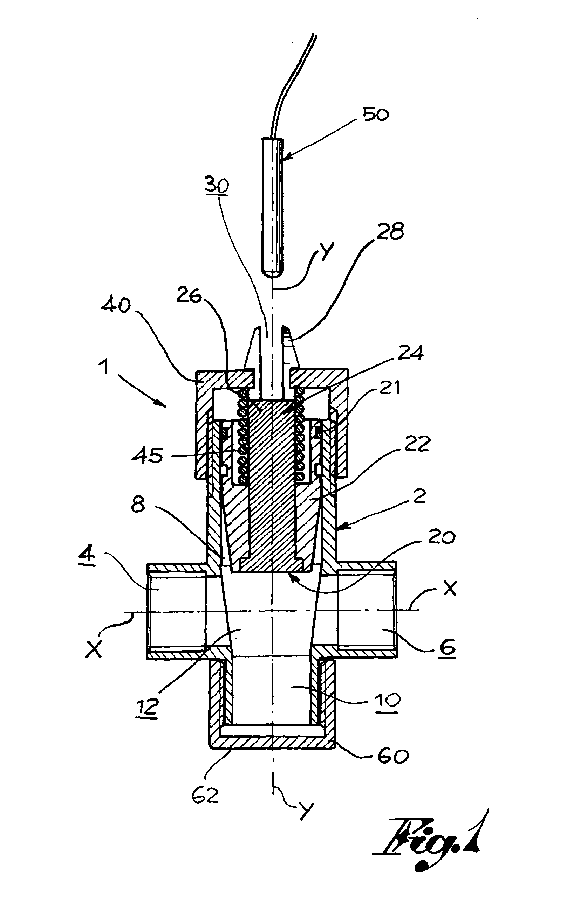

- figure 1 shows a side section view of an intercepting device, according to a first variation of embodiment in accordance with the present invention, and a candle of detecting means associated thereto;

- figure 2 shows a side section view of an intercepting device, according to a further variation of embodiment in accordance with the present invention, and a candle of detecting means associated thereto, and

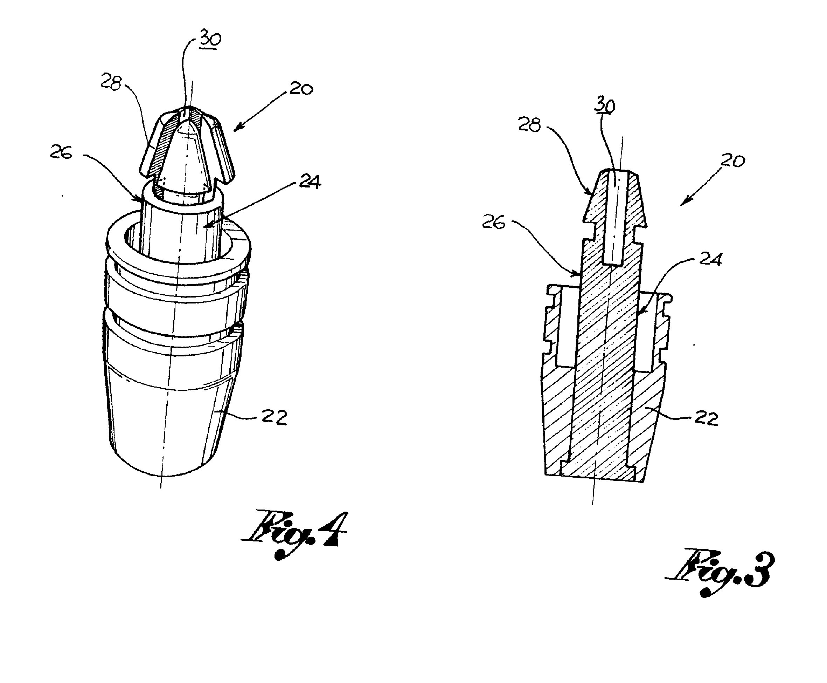

- figure 3 shows a section view of a shutting element.

With reference to the annexed figures, reference numeral 1 globally denotes a fluid intercepting device, in particular a water intercepting device associable to a distribution system, for example for household use.

The intercepting device 1 comprises a body 2 provided with an inlet duct 4, associable to a fluid distribution system, for the fluid inlet into the body. Moreover, body 2 is provided with an outlet duct 6, associable to said fluid distribution system, for dispensing the fluid towards said distribution system.

For example, device 1 can be installed between the water distribution system, for example the system consisting of the aqueduct mains, and the water distribution system in a house. Said device is therefore associable to said distribution system, upstream thereof.

According to a preferred embodiment, body 2 exhibits a longitudinal axis X-X, along which there are arranged the inlet duct 4 and the outlet duct 6, and a cross axis Y-Y, perpendicular to said longitudinal axis X-X, along which there are arranged a seating space 8 and a storage chamber 10. Preferably, therefore, said body 2 has a cross configuration.

As can be understood, the inlet duct 4 and the outlet duct 6 form a path inside body 2 of device 1 and along said path there is arranged a storage opening 12 for the access to said storage chamber 10, intended for seating the residues dispersed in the flow passing between said inlet duct 4 and said outlet duct 6.

Advantageously, the storage chamber 10 is arranged below said inside path, said residues being conveyed towards said storage chamber by the gravity action.

Preferably, the storage chamber 10 is closed by a removable plug 11 associable, for example by screwing, to said body 2.

Preferably, moreover, body 2 exhibits an intermediate space 12, arranged between the inlet duct 4 and the outlet duct 6, having a configuration converging towards said storage chamber 10, for example a truncated-cone configuration.

Advantageously, said configuration of the intermediate space 12 facilitates the conveyance of the residues present into the fluid, for example sand, grains of scale and the like dispersed in the water, towards the storage chamber.

Moreover, device 1 comprises a shutting element 20 suitable for switching between an open configuration, wherein it allows the passage of the fluid from said inlet duct 4 to said outlet duct 6, and a closed configuration, wherein it prevents said passage.

In said open configuration, the shutting element 20 is arranged in said seating space 8 of body 2.

Preferably, the shutting element 20 comprises a sealing ring 21, suitable for obtaining a seal between said shutting element 20 and the walls of the seating space 8, in order to prevent fluid leaks outwards.

Preferably, the shutting element 20 comprises a head 22, suitable for coupling with shape coupling with the intermediate space 12 of body 2, for example of truncated-cone shape, and a stem 24, which elongates protruding from said head 22.

Stem 24 comprises at least one yielding end portion 26 which preferably exhibits an end portion 28 provided with a plurality of slots 30 that facilitate the radial compression thereof. Moreover, said end portion 28 externally exhibits a truncated-cone configuration for constraining the shutting element.

According to a preferred embodiment, said shutting element is made of food grade material, for example according to the provisions of the United States FDA (Food and Drug Administration).

Preferably, moreover, device 1 comprises a cover 40 associated to body 2 for closing the seating space 8.

The shutting element 20 can be inserted in the seating space 8 of body 2, with which it sealingly couples.

In particular, head 22 arranges towards the intermediate space 12, whereas stem 24 crosses cover 40 and protrudes at least partly outwards, for example with said end portion 28 that engages cover 40 preventing the shutting element from withdrawing from said cover 40.

Moreover, device 1 comprises actuating means suitable for constantly influencing said shutting element from said open configuration to said closed configuration.

For example, said actuating means comprise a spring that remains compressed between the head of the shutting element and cover 40, preferably fitted on the stem of the shutting element.

As can be understood, the end portion 28 of the end portion 26 of stem 24 of the shutting element 20, inserted, for example snap-wise, in cover 40, forms an example of holding means suitable for cooperating with said shutting element for holding it into said open configuration, despite the action of said actuating means.

Device 1 is associable to detecting means suitable for detecting a fluid leak in said distribution system.

For example, said detecting means are suitable for emitting a detection signal at a predetermined event, for example they are suitable for emitting a detection signal when a continuous fluid flow passing in the system for as predetermined time, or the passage of a predetermined volume of fluid through the system, are detected.

Said detecting means comprise heating means which, actuated by said detection signal, are suitable for heating said shutting element.

For example, said detecting means comprise a heating candle 50, associable to the end portion 28 of the shutting element 20, which warms the end portion 26 of said shutting element 20 in the presence of said detection signal.

As can be understood, said holding means comprise a yielding element, that is the end portion of the stem of the shutting element, suitable for yielding, influenced by said detecting means, to the action of said actuating means on said shutting element, leaving said shutting element free to move to said closed configuration under the action of said actuating means.

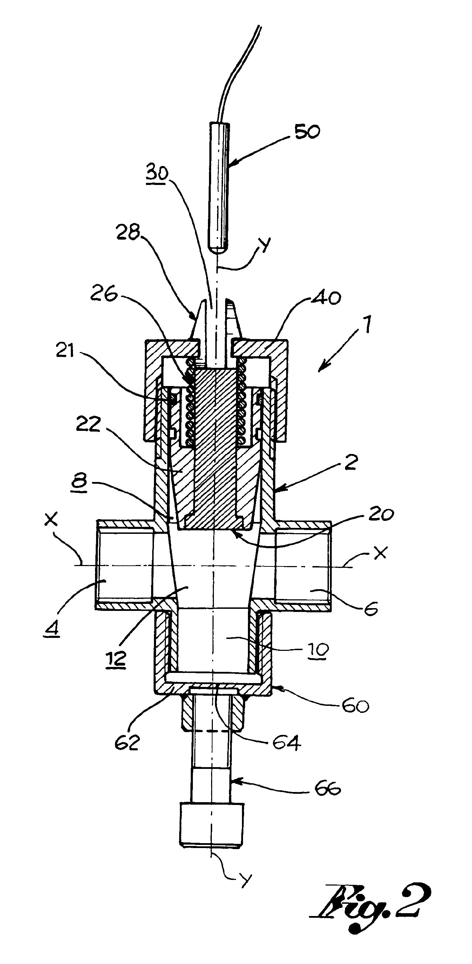

In accordance with a further variation of embodiment (figure 2), device 1 comprises restoring means suitable for being handled through control for returning said shutting element from said closed configuration to said open configuration.

Said restoring means comprise the removable plug 60 associable to the storage chamber 10, provided with a closing wall 62 that delimits said storage chamber 10.

The closing wall 62 comprises at least one tearable portion 64 arranged in the proximity of said shutting element in said closed configuration.

Moreover, said restoring means comprise a screw 66 operatively connected to plug 60, suitable for being screwed by tearing said tearable portion 64, thereby moving first in abutment of the shutting element in said closed configuration and then lifting it to return it to the open configuration.

In the standard assembly, device 1 is arranged upstream of a fluid distribution system, for example water.

For simplicity of description, it is assumed that the detecting means are suitable for detecting a continuous flow of water inside the system in a predetermined interval of time and that they emit the detection signal when said event is detected. For example, the detecting means, in the form of a counter, detects an uninterrupted water flow for five hours: such event is interpreted as the presence of a leak in the distribution system and a detection signal is generated.

The detection signal actuates the heating means: the candle is heated and the end portion 26 of stem 24 of the shutting element 20 softens, or even melts, under the action of the heat, until it yields to the action of the actuating means acting on the shutting element.

When the end portion yields, the shutter is pushed by the spring so that head 22 couples with the intermediate space 12, closing the water passage between the inlet duct 4 and the outlet duct 6 of body 2.

As can be understood, the shutting element is not restorable, so to reuse the device it is necessary to replace it.

Advantageously, said replacement can be carried out by a plumber or by the user himself/herself.

To replace the shutting element used, a replacement assembly is provided, comprising a further cover 40, a further shutting element 20 already engaged with the further cover 40 and a further spring 45 already fitted on stem 24 of the further shutting element 20. To replace the used shutting element it is sufficient to unscrew cover 40, remove the used shutting element and install said replacement assembly.

Screwing cover 40 to the body, the further shutting element is in position again and, once the heating candle 50 has been inserted in the end portion 28 of stem 24, the detecting means are capable of influencing said shutting element again.

Advantageously, the device described above is sold together with a plurality of replacement assemblies, in order to allow a convenient replacement of the same.

Advantageously, moreover, the device described above is associated to said detecting means for forming an intercepting apparatus.

During the standard operation, moreover, water flows from the inlet duct 4 towards the outlet duct 6, passing through the intermediate space 12, converging towards the storage chamber 10. Advantageously, the configuration of the intermediate space allows facilitating the conveyance of sand, crushed stone, scale and other residues dispersed in the water towards the storage chamber, preventing them from accumulating on the walls of the intermediate space, on which the head of the shutting element will have to adhere to inhibit the water flow from the inlet duct to the outlet duct.

The water dispensing towards the distribution system can be restored using the intercepting device described above in accordance with a variation of embodiment (figure 2).

If, for example temporarily, the user needs to dispense water to the distribution system even if the shutting element is in the closed configuration, screwing the screw of the restoring means, the tearable plug of the plug closing wall is torn, the screw moves in abutment of the shutting element and, continuing to screw, lifts it from the lowered position of the closed configuration.

In this way, the fluid continuity between the inlet duct and the outlet duct is at least partly restored, allowing water dispensing.

Innovatively, the device according to the present invention allows meeting the requirements mentioned and obviating the disadvantages of the prior art.

In particular, the device is reliable and the shutting element is capable of blocking the water flow also after having remained in the open configuration for a very long time.

In fact in the device the spring action on the shutting element is high, so as to overcome any resistance actions generated by the accumulation of residues over time.

Moreover, the residues are conveyed in the storage chamber, so that the adhesion of the shutting element head in the intermediate space is ensured.

Advantageously, moreover, inserting the heating element 50 at the end of stem 24, a structural stiffening of the end portion 28 of said stem is obtained, preventing the accidental release of the engagement with cover 40.

According to such advantageous aspect, moreover, it is possible to use springs having high loading values, without risking that the end portion 28, generally of plastic, yields, for example after long periods of operation.

It is clear that a man skilled in the art can make several changes and variations to the device described above in order to meet specific and incidental needs.

For example, the end portion of stem 24, in accordance with a variation of embodiment, is provided with a slot having axial prevailing extension.

In this way, the end portion can be inserted in the hole of cover 40, making an eyelet protrude from the device. The heating element can be inserted in the eyelet, taking a cross position and steadily engaging the shutting element to the cover.

Also such variations are comprised within the scope of protection as defined by the following claims.

## Claims

1. A fluid intercepting device (1) associable to a distribution system of said fluid, wherein said device is associable to detecting means suitable for detecting a fluid leak in said distribution system, and wherein said device comprises:
- a body (2) provided with an inlet duct (4), associable to a fluid distribution system, for the fluid inlet into the body, and with an outlet duct (6), associable to said distribution system, for dispensing the fluid towards said distribution system;
- a shutting element (20) suitable for switching from an open configuration, wherein it allows the passage of the fluid from said inlet duct to said outlet duct, to a closed configuration, wherein it prevents said passage;
- actuating means suitable for constantly influencing said shutting element from said open configuration to said closed configuration;
- holding means suitable for cooperating with said shutting element for holding it in said open configuration, said holding means being influenced by said leak detecting means;
said device being **characterised in that** said holding means comprise a yielding element (28) suitable for yielding, influenced by said detecting means, to the action of said actuating means on said shutting element, leaving said shutting element (2) free to move to said closed configuration under the action of said actuating means.

2. A device according to claim 1, wherein said detecting means are suitable for contributing heat to said holding means and wherein said yielding element structurally yields under the action of said actuating means and of said heat contribution.

3. A device according to claim 2, wherein said yielding element is made of a thermoplastic material.

4. A device according to any one of the previous claims, wherein said yielding element consists of at least one portion of said shutting element (20).

5. A device according to claim 4, wherein said yielding element consists of an end portion (26) of a stem (24) of said shutting element (20).

6. A device according to claim 5, wherein said end portion (26) of the stem (24) of the shutting element is at least partly arranged externally to said body (2).

7. A device according to claim 5 or 6, wherein said end portion of the stem of the shutting element comprises an end portion (28) having a plurality of slots (30) that divide it into a plurality of tongues.

8. A device according to claim 7, wherein between said tongues there can be seated a heating element (50) of said detecting means.

9. A device according to any one of claims 5 to 8, wherein said shutting element comprises a truncated-cone head (22), said head being suitable for blocking the fluid passage between said inlet duct and said outlet duct.

10. A device according to any one of the previous claims, wherein said inlet duct and said outlet duct form a path inside the device body, along said path there being arranged a storage opening for the access to a storage chamber (10) of said body (2).

11. A device according to claim 10, wherein said storage chamber is suitable for seating residues dispersed in the fluid flow passing between said inlet duct and said outlet duct.

12. A device according to claim 10 or 11, wherein said storage chamber is arranged below said inside path, said residues being conveyed towards said storage chamber by the gravity action.

13. A device according to any one of claims 10 to 12, wherein between said inlet duct and said outlet duct there is arranged an intermediate space (12), said intermediate space being converging towards said storage chamber.

14. A device according to claim 13, wherein said space has a truncated-cone configuration converging towards said storage chamber (10).

15. A device according to any one of the previous claims, wherein said holding means comprise a cover (40), said shutting element being arranged through said cover and said actuating means being compressed between said shutting element and said cover.

16. A device according to any one of the previous claims, wherein said actuating means comprise a spring (45).

17. A device according to any one of claim 10 to 16, wherein said storage chamber (10) is closed by a removable plug (60).

18. A device according to any one of the previous claims, further comprising restoring means suitable for being handled through control for returning said shutting element (20) from said closed configuration to said open configuration.

19. A device according to claim 18, wherein between the inlet duct and the outlet duct there is arranged a storage chamber (10), said storage chamber (10) being closed by a removable plug (60), wherein said plug comprises a closing wall (62) that delimits said storage chamber (10), wherein said closing wall (62) comprises at least one tearable portion (64) arranged in the proximity of said shutting element in said closed configuration.

20. A device according to claim 19, wherein said restoring means comprise a screw (66) operatively connected to said plug, suitable for being screwed by tearing said tearable portion of the plug, said screw being suitable for influencing said shutting element for moving it from said closed configuration to said open configuration.

21. A fluid intercepting apparatus comprising
- an intercepting device (1) according to any one of the previous claims;
- detecting means suitable for detecting a fluid leak in said distribution system.

22. An apparatus according to claim 21, wherein said detecting means are suitable for detecting a fluid flow through said distribution system and for emitting a detection signal at a predetermined event.

23. An apparatus according to claim 22, wherein said detecting means comprise heating means suitable for heating said shutting element in the presence of said detection signal.

24. An apparatus according to claim 23, wherein said heating means comprise a heating candle (50) suitable for being inserted in said shutting element for yielding a portion of said shutting element.

25. An apparatus according to any one of claims 22 to 24, wherein said event consists of the passage in the distribution system of a predetermined fluid volume passed in a predetermined interval of time.

26. A shutting element (20) for an intercepting device obtained according to any one of claims 1 to 20 comprising
- a head (22) suitable for blocking the fluid passage from said inlet duct to said outlet duct;
- a stem (24), projecting from said head, having a yielding end portion (26) made of a material suitable for structurally yielding under the action of said actuating means and of a contribution of heat of said detecting means, wherein said stem exhibits an end portion (28) having a plurality of slots (30) that facilitate the radial compression of said end portion;
said shutting element being **characterised in that**
said end portion (28) can be inserted snap-wise in said body (2) of the intercepting device (1).

27. A shutting element according to claim 26, wherein said end portion (28) is suitable for seating a heating candle (50) of said detecting means.

28. Sales kit comprising
- an intercepting apparatus constructed according to any one of claims 21 to 25;
- a plurality of shutting elements (20) constructed according to claim 26 or 27.

## Patentansprüche

1. Fluidabfang- bzw. -unterbrechungseinrichtung (1), die einem Verteilungssystem für das Fluid zuordenbar ist bzw. mit diesem verbindbar ist, wobei die Einrichtung Detektiermitteln zuordenbar ist bzw. mit diesen verbindbar ist, die ein Fluidleck in dem Verteilungssystem detektieren, und wobei die Einrichtung umfasst:
- einen Körper (2), der mit einer Einlassleitung (4), die einem Fluidverteilungssystem zuordenbar ist bzw. mit diesem verbindbar ist, für den Fluideinlass in den Körper, und einer Auslassleitung (6) versehen ist, die dem Verteilungssystem zuordenbar ist bzw. mit diesem verbindbar ist, zum Ausgeben des Fluids an das Verteilungssystem;
- ein Schließelement (20), das geeignet ist, von einer offenen Konfiguration, in der es den Durchtritt bzw. Durchlauf des Fluids von der Einlassleitung zu der Auslassleitung erlaubt, zu einer geschlossenen Konfiguration zu schalten, in der es den Durchtritt verhindert;
- Betätigungsmittel, die geeignet sind, das Schließelement konstant bzw. kontinuierlich von der offenen Konfiguration zu der geschlossenen Konfiguration zu beeinflussen bzw. zu bewegen;
- Haltemittel, die geeignet sind, mit dem Schließelement zusammenzuwirken, um es in der offenen Konfiguration zu halten, wobei die Haltemittel durch die Leckdetektiermittel beeinflusst werden;
wobei die Einrichtung **dadurch gekennzeichnet ist, dass** die Haltemittel ein nachgebendes Element (28) umfassen, das geeignet ist, unter Einfluss der Detektiermittel dem Einwirken der Betätigungsmittel auf das Schließelement nachzugeben, wobei das Schließelement (2) frei ist, sich unter der Einwirkung der Betätigungsmittel in die geschlossene Konfiguration zu bewegen.

2. Einrichtung nach Anspruch 1, wobei die Detektiermittel geeignet sind, Wärme zu den Haltemitteln beizusteuern und wobei das nachgebende Element strukturell unter der Einwirkung der Betätigungsmittel und der Wärmebeisteuerung nachgibt.

3. Einrichtung nach Anspruch 2, wobei das nachgebende Element aus einem thermoplastischen Material besteht.

4. Einrichtung nach einem der vorhergehenden Ansprüche, wobei das nachgebende Element aus wenigstens einem Abschnitt des Schließelements (20) besteht.

5. Einrichtung nach Anspruch 4, wobei das nachgebende Element aus einem Endabschnitt (26) eines Schafts (24) des Schließelements (20) besteht.

6. Einrichtung nach Anspruch 5, wobei der Endabschnitt (26) des Schafts (24) des Schließelements wenigstens teilweise extern zu dem Körper (2) angeordnet ist.

7. Einrichtung nach Anspruch 5 oder 6, wobei der Endabschnitt des Schafts des Schließelements einen Endabschnitt (28) mit einer Mehrzahl von Schlitzen (30) umfasst, die ihn in eine Mehrzahl von Zungen unterteilen.

8. Einrichtung nach Anspruch 7, wobei zwischen den Zungen ein Heizelement (50) der Detektiermittel plaziert sein kann.

9. Einrichtung nach einem der Ansprüche 5 bis 8, wobei das Schließelement einen kegelstumpfförmigen Kopf (22) umfasst, wobei der Kopf geeignet ist, den Fluiddurchtritt bzw. -durchlauf zwischen der Einlassleitung und der Auslassleitung zu blockieren.

10. Einrichtung nach einem der vorhergehenden Ansprüche, wobei die Einlassleitung und die Auslassleitung einen Weg innerhalb des Einrichtungskörpers bilden, wobei entlang dem Weg eine Speicheröffnung für den Zugang zu einer Speicherkammer (10) des Körpers (2) angeordnet ist.

11. Einrichtung nach Anspruch 10, wobei die Speicherkammer geeignet ist, Rückstände aufzunehmen, die in dem Fluidfluss dispergiert werden bzw. sind, der zwischen der Einlassleitung und der Auslassleitung verläuft.

12. Einrichtung nach Anspruch 10 oder 11, wobei die Speicherkammer unterhalb des inneren Wegs angeordnet ist, wobei die Rückstände durch die Wirkung der Schwerkraft zu der Speicherkammer hin befördert werden.

13. Einrichtung nach einem der Ansprüche 10 bis 12, wobei zwischen der Einlassleitung und der Auslassleitung ein Zwischenraum (12) angeordnet ist, wobei der Zwischenraum zu der Speicherkammer hin konvergiert bzw. zusammenläuft.

14. Einrichtung nach Anspruch 13, wobei der Raum eine kegelstumpfförmige Konfiguration aufweist, die zu der Speicherkammer (10) hin konvergiert bzw. zusammenläuft.

15. Einrichtung nach einem der vorhergehenden Ansprüche, wobei die Haltemittel eine Abdeckung (40) umfassen, wobei das Schließelement durch die Abdeckung hindurch angeordnet ist und die Betätigungsmittel zwischen dem Schließelement und der Abdeckung zusammengedrückt sind.

16. Einrichtung nach einem der vorhergehenden Ansprüche, wobei die Betätigungsmittel eine Feder (45) umfassen.

17. Einrichtung nach einem der Ansprüche 10 bis 16, wobei die Speicherkammer (10) durch einen entfernbaren Stopfen (60) verschlossen ist.

18. Einrichtung nach einem der vorhergehenden Ansprüche, ferner umfassend Rückstellmittel, die geeignet sind, durch Steuerung bzw. Regelung gehandhabt zu werden, um das Schließelement (20) aus der geschlossenen Konfiguration in die offene Konfiguration zurückzubringen.

19. Einrichtung nach Anspruch 18, wobei zwischen der Einlassleitung und der Auslassleitung eine Speicherkammer (10) angeordnet ist, wobei die Speicherkammer (10) durch einen entfernbaren Stopfen (60) verschlossen ist,
wobei der Stopfen eine Schließwand (62) umfasst, welche die Speicherkammer (10) begrenzt, wobei die Schließwand (62) wenigstens einen zerreißbaren bzw. abreißbaren Abschnitt (64) umfasst, der in der Nähe des Schließelements in der geschlossenen Konfiguration angeordnet ist.

20. Einrichtung nach Anspruch 19, wobei die Rückstellmittel eine Schraube (66) umfassen, die wirkungsmäßig mit dem Stopfen verbunden ist, die geeignet ist, durch Zerreißen bzw. Abreißen des zerreißbaren bzw. abreißbaren Abschnitts des Stopfens geschraubt zu werden, wobei die Schraube geeignet ist, das Schließelement zu beeinflussen bzw. auf dieses einzuwirken, um es aus seiner geschlossenen Konfiguration in die offene Konfiguration zu bewegen.

21. Fluidabfang- bzw. -unterbrechungsvorrichtung, umfassend
- eine Abfang- bzw. -unterbrechungseinrichtung (1) nach einem der vorhergehenden Ansprüche;
- detektiermittel, die geeignet sind, ein Fluidleck in dem Verteilungssystem zu detektieren.

22. Vorrichtung nach Anspruch 21, wobei die Detektiermittel geeignet sind, einen Fluidfluss durch das Verteilungssystem zu detektieren und ein Detektiersignal bei einem vorbestimmten Ereignis auszusenden.

23. Vorrichtung nach Anspruch 22, wobei die Detektiermittel Heizmittel umfassen, die geeignet sind, das Schließelement bei Vorhandensein des Detektiersignals zu erwärmen.

24. Vorrichtung nach Anspruch 23, wobei die Heizmittel eine Heizkerze (50) umfassen, die geeignet ist, in das Schließelement eingesetzt zu werden, um einen Abschnitt des Schließelements zu dehnen.

25. Vorrichtung nach einem der Ansprüche 22 bis 24, wobei das Ereignis aus dem Durchtritt bzw. Übergang eines vorbestimmten Fluidvolumens in das Verteilungssystem besteht, das in einem vorbestimmten Zeitintervall durchgelassen wird.

26. Schließelement (20) für eine Abfang- bzw. Unterbrechungseinrichtung, die nach einem der Ansprüche 1 bis 20 erhalten wird, umfassend
- einen Kopf (22), der geeignet ist, den Fluiddurchtritt bzw. -durchlauf von der Einlassleitung zu der Auslassleitung zu blockieren,
- einen Schaft (24), der von dem Kopf absteht, der einen nachgebenden Endabschnitt (26) aufweist, der aus einem Material besteht, dass geeignet ist, strukturell unter der Einwirkung der Betätigungsmittel und einer Beisteuerung von Wärme der Detektiermittel nachzugeben, wobei der Schaft einen Endabschnitt (28) mit einer Mehrzahl von Schlitzen (30) aufweist, die das radiale Zusammendrücken des Endabschnitts erleichtern;
wobei das Schließelement **dadurch gekennzeichnet, dass**
der Endabschnitt (28) auf schnappende Weise in den Körper (2) der Abfang- bzw. Unterbrechungseinrichtung (1) eingesetzt werden kann.

27. Schließelement nach Anspruch 26, wobei der Endabschnitt (28) geeignet ist, eine Heizkerze (50) der Detektiermittel aufzunehmen.

28. Verkaufsset bzw. Sales-Kit, umfassend
- eine Abfang- bzw. Unterbrechungsvorrichtung, die nach einem der Ansprüche 21 bis 25 konstruiert ist;
- eine Mehrzahl von Schließelementen (20), die nach Anspruch 26 oder 27 konstruiert sind.

## Revendications

1. Dispositif (1) d'interception de fluide pouvant être associé à un système de distribution dudit fluide, dans lequel ledit dispositif peut être associé à des moyens de détection adaptés pour détecter une fuite de fluide dans ledit système de distribution, et dans lequel ledit dispositif comprend :
- un corps (2) doté d'un conduit (4) d'entrée, pouvant être associé à un système de distribution de fluide, pour l'entrée du fluide dans le corps, et d'un conduit (6) de sortie, pouvant être associé audit système de distribution, pour distribuer le fluide vers ledit système de distribution ;
- un élément (20) de fermeture adapté pour passer d'une configuration ouverte, dans laquelle il permet le passage du fluide dudit conduit d'entrée audit conduit de sortie, à une configuration fermée, dans laquelle il empêche ledit passage ;
- des moyens d'actionnement adaptés pour influencer en continu ledit élément de fermeture de ladite configuration ouverte à ladite configuration fermée ;
- des moyens de maintien adaptés pour coopérer avec ledit élément de fermeture pour le maintenir dans ladite configuration ouverte, lesdits moyens de maintien étant influencés par lesdits moyens de détection de fuite ;
ledit dispositif étant **caractérisé en ce que** lesdits moyens de maintien comprennent un élément élastique (28) adapté pour fléchir, influencé par lesdits moyens de détection, sous l'action desdits moyens d'actionnement sur ledit élément de fermeture, laissant ledit élément (2) de fermeture libre de se déplacer vers ladite configuration fermée sous l'action desdits moyens d'actionnement.

2. Dispositif selon la revendication 1, dans lequel lesdits moyens de détection sont adaptés pour contribuer à la chaleur desdits moyens de maintien et dans lequel ledit élément élastique fléchit structurellement sous l'action desdits moyens d'actionnement et de ladite contribution de chaleur.

3. Dispositif selon la revendication 2, dans lequel ledit élément élastique est constitué d'un matériau thermoplastique.

4. Dispositif selon l'une quelconque des revendications précédentes, dans lequel ledit élément élastique est constitué d'au moins une partie dudit élément (20) de fermeture.

5. Dispositif selon la revendication 4, dans lequel ledit élément élastique est constitué d'une partie (26) d'extrémité d'une tige (24) dudit élément (20) de fermeture.

6. Dispositif selon la revendication 5, dans lequel ladite partie (26) d'extrémité de la tige (24) de l'élément de fermeture est au moins en partie agencée à l'extérieur dudit corps (2).

7. Dispositif selon la revendication 5 ou 6, dans lequel ladite partie d'extrémité de la tige de l'élément de fermeture comprend une partie (28) d'extrémité ayant une pluralité de fentes (30) qui la divisent en une pluralité de languettes.

8. Dispositif selon la revendication 7, dans lequel un élément (50) de chauffage desdits moyens de détection peut être placé entre lesdites languettes.

9. Dispositif selon l'une quelconque des revendications 5 à 8, dans lequel ledit élément de fermeture comprend une tête tronconique (22), ladite tête étant adaptée pour bloquer le passage de fluide entre ledit conduit d'entrée et ledit conduit de sortie.

10. Dispositif selon l'une quelconque des revendications précédentes, dans lequel ledit conduit d'entrée et ledit conduit de sortie forment un trajet à l'intérieur du corps du dispositif, une ouverture de stockage étant agencée le long dudit trajet pour l'accès à une chambre (10) de stockage dudit corps (2).

11. Dispositif selon la revendication 10, dans lequel ladite chambre de stockage est adaptée pour placer des résidus dispersés dans l'écoulement de fluide passant entre ledit conduit d'entrée et ledit conduit de sortie.

12. Dispositif selon la revendication 10 ou 11, dans lequel ladite chambre de stockage est agencée au-dessous dudit trajet interne, lesdits résidus étant acheminés vers ladite chambre de stockage sous l'effet de la gravité.

13. Dispositif selon l'une quelconque des revendications 10 à 12, dans lequel un espace intermédiaire (12) est agencé entre ledit conduit d'entrée et ledit conduit de sortie, ledit espace intermédiaire convergeant vers ladite chambre de stockage.

14. Dispositif selon la revendication 13, dans lequel ledit espace a une configuration tronconique convergeant vers ladite chambre (10) de stockage.

15. Dispositif selon l'une quelconque des revendications précédentes, dans lequel lesdits moyens de maintien comprennent un couvercle (40), ledit élément de fermeture étant agencé à travers ledit couvercle et lesdits moyens d'actionnement étant comprimés entre ledit élément de fermeture et ledit couvercle.

16. Dispositif selon l'une quelconque des revendications précédentes, dans lequel lesdits moyens d'actionnement comprennent un ressort (45).

17. Dispositif selon l'une quelconque des revendications 10 à 16, dans lequel ladite chambre (10) de stockage est fermée par un bouchon amovible (60).

18. Dispositif selon l'une quelconque des revendications précédentes, comprenant en outre des moyens de rappel adaptés pour être manipulés par le bais d'une commande pour passer ledit élément (20) de fermeture de ladite configuration fermée à ladite configuration ouverte.

19. Dispositif selon la revendication 18, dans lequel une chambre (10) de stockage est agencée entre le conduit d'entrée et le conduit de sortie, ladite chambre (10) de stockage étant fermée par un bouchon amovible (60), dans lequel ledit bouchon comprend une paroi (62) de fermeture qui délimite ladite chambre (10) de stockage, dans lequel ladite paroi (62) de fermeture comprend au moins une partie déchirable (64) agencée à proximité dudit élément de fermeture dans ladite configuration fermée.

20. Dispositif selon la revendication 19, dans lequel lesdits moyens de rappel comprennent une vis (66) reliée de manière fonctionnelle audit bouchon, adapté pour être vissé en déchirant ladite partie déchirable du bouchon, ladite vis étant adaptée pour influencer ledit élément de fermeture pour le déplacer de ladite configuration fermée à ladite configuration ouverte.

21. Appareil d'interception de fluide comprenant
- un dispositif (1) d'interception selon l'une quelconque des revendications précédentes ;
- des moyens de détection adaptés pour détecter une fuite de fluide dans ledit système de distribution.

22. Appareil selon la revendication 21, dans lequel lesdits moyens de détection sont adaptés pour détecter un écoulement de fluide à travers ledit système de distribution et pour émettre un signal de détection à un évènement prédéterminé.

23. Appareil selon la revendication 22, dans lequel lesdits moyens de détection comprennent des moyens de chauffage adaptés pour chauffer ledit élément de fermeture en présence dudit signal de détection.

24. Appareil selon la revendication 23, dans lequel lesdits moyens de chauffage comprennent une bougie (50) de chauffage adaptée pour être insérée dans ledit élément de fermeture pour fléchir une partie dudit élément de fermeture.

25. Appareil selon l'une quelconque des revendications 22 à 24, dans lequel ledit évènement est constitué du passage dans le système de distribution d'un volume de fluide prédéterminé passé dans un intervalle de temps prédéterminé.

26. Élément (20) de fermeture pour un dispositif d'interception obtenu selon l'une quelconque des revendications 1 à 20 comprenant
- une tête (22) adaptée pour bloquer le passage de fluide dudit conduit d'entrée audit conduit de sortie ;
- une tige (24), faisant saillie de ladite tête, ayant une partie (26) d'extrémité élastique constituée d'un matériau adapté pour fléchir structurellement sous l'action desdits moyens d'actionnement et d'une contribution de chaleur desdits moyens de détection, dans lequel ladite tige présente une partie (28) d'extrémité ayant une pluralité de fentes (30) qui facilitent la compression radiale de ladite partie d'extrémité ;
ledit élément de fermeture étant **caractérisé en ce que**
ladite partie (28) d'extrémité peut être insérée par encliquetage dans ledit corps (2) du dispositif (1) d'interception.

27. Élément de fermeture selon la revendication 26, dans lequel ladite partie (28) d'extrémité est adaptée pour placer une bougie (50) de chauffage desdits moyens de détection.

28. Kit commercial comprenant
- un appareil d'interception conçu selon l'une quelconque des revendications 21 à 25 ;
- une pluralité d'éléments (20) de fermeture conçue selon la revendication 26 ou 27.
